# EUROPEAN PATENT APPLICATION

(11) **EP 1 752 426 A2**
(43) Date of publication of application: **14.02.2007**
(21) Application number: 06118440.4
(22) Date of filing: 15.12.1999
(51) Int. Cl.: C03C 17/36, E06B 5/16

(54) **Glazing panel**

(30) Priority: 18.12.1998 EP 98204318
(62) Divisional of application: 99967971.5
(71) Applicant: GLAVERBEL, 1170 Bruxelles (BE)
(72) Inventor: Decroupet, Daniel, 6040 Jumet (BE); Goelff, Pierre, 6040 Jumet (BE)
(74) Representative: Farmer, Guy Dominic

(57) **Abstract**

A multiple sheet glazing panel having dimensions of at least 0.9m by 2m has
a first glass substrate carrying at least one coating layer and
a second glass substrate, spaced from the first glass substrate without an intervening intumescent material;
the glazing panel assembled in Frame System G has a fire resistance of at least 65 minutes when tested according to European Standards prEN 1363-1 and prEN 1364-1 (Final drafts of October 1998).

## Description

This invention relates to glazing panels and particularly, but not exclusively, to glazing panels which are intended to provide a degree of fire protection or fire screening.

A fire screening glazing panel preferably fulfils a number of separate functions. These may include:
- resisting breakage and/or collapsing when exposed to fire so as to provide a physical barrier to smoke, hot gasses and flames;
- providing a barrier to the propagation of heat from a fire so as to provide a passageway on the fire protected side of the glazing which can be used to evacuate a building and/or so as to reduce the risk of spontaneous combustion of flammable materials on the fire protected side.

Building codes define degrees of fire shielding required for different building applications.

Such glazing panel allow visibility through the panels whilst nevertheless proving a desired level of fire screening. The TL of the glazing panel may be, for example, greater than 15%, 30%, 50%, 60% or 70%.

According to one aspect, the present invention provides a glazing panel as defined in Claim 1.

Such fire resistance has not previously been obtainable in such structures. The multiple sheet glazing panel may have a fire resistance according to European Standards prEN 1363-1, prEN 1364-1 and/or prEN1363-2 (Final drafts of October 1998) of greater than or equal to 70, 75, 80, 90 or 100 minutes.

Preferably, the second glass substrate also carries at least one coating layer; this may be a coating layer which is the same as the coating layer carried by the first glass substrate.

The invention may allow a glazing panel having, for example, dimensions of at least 0.9m by 2.2m, or 0.9m by 2.4m, or 1m by 2m, or 1.2m by 2m, or 1.2m by 2.2m, or 1.2m by 2.4 m to have the defined fire resistance.

According to another aspect, the present invention provides a glazing panel as defined in Claim 2.

The two glazing panels are arranged side by side for example with their edges abutting so as to permit the radiation of the glazing panel per se to be measured rather than measuring the radiation of the glazing panel with the surrounding masonry. The two glazing panels may be separated by a mullion for measuring the radiation.

Preferably, the second glass substrate also carries at least one coating layer; this may be a coating layer which is the same as the coating layer carried by the first glass substrate.

Such levels of thermal radiation have not previously been obtainable in such structures. The multiple sheet glazing panel may have a thermal radiation after 60 minutes of a fire test according to European Standards prEN 1363-1, prEN 1364-1 and/or prEN1363-2 (Final drafts of October 1998) of less than or equal to 9, 8, 7, 6 or 5 kW/m².

The multiple sheet glazing panel may have a thermal radiation after 90 minutes of a fire test according to European Standards prEN 1363-1, prEN 1364-1 and/or prEN1363-2 (Final drafts of October 1998) of less than or equal to 15, 12, 10, 9, 8, 7, 6 or 5 kW/m².

The invention may allow a glazing panel having, for example, dimensions of at least 0.9m by 2.2m, or 0.9m by 2.4m, or 1m by 2m, or 1.2m by 2m, or 1.2m by 2.2m, or 1.2m by 2.4 m to have the defined thermal radiation.

One or each of the glass substrates may
• have a thickness of at least 3mm, 4mm, 5mm, 6mm or 8mm;
• be heat tempered, for example with a surface compression of between about 80 MPa and 150 MPa, preferably between about 90 and 110 MPa, for example about 100 MPa
• comprise sodalime float glass
• comprise a fire resistance glass, for example, a borosilicate glass
• be integrated in a laminated and/or multiple sheets glazing unit.

According to a further aspect, the present invention provides a glazing panel as defined in Claim 3.

The infra-red reflectance of the glazing panel in the band of wavelengths 1-10 microns once the glazing panel has been subjected to a heating cycle equivalent to that defined as Heat Cycle A herein may be at least 65%, 70% 75% or 80%.

The inventors have realised
• that the defined properties can be conferred on a glazing panel by means of a coating layer
• that such properties can enhance the fire screening ability of the glazing panel and
• that advantageous fire screening properties can be conferred by arranging the reflection in the defined wavelengths above the defined limits.

It is believed that the defined wavelengths correspond to the preponderant wavelength of reflections required for good fire screening properties.

Heating Cycle A (defined further on) is intended to approximate a fire test.

According to another aspect, the present invention provides a glazing panel as defined in Claim 4.

In this case, the infra-red reflectance of the glazing panel in the band of wavelengths 1-10 microns once the glazing panel has been subjected to a heating cycle equivalent to that defined as Heat Cycle A herein may be at least 70%, 75%, 80%, 85% or 90%.

The use of at least two spaced infra-red reflecting layers may be used to improve the reflectance of the glazing panel in the defined band of wavelengths.

The use of at least three spaced infra-red reflecting layers may result in a reflectance in the defined band of wavelengths of at least 90% or 95%.

Whilst coating layers are commonly applied to glazing panels, for example to increase the selectivity in architectural and automotive applications, previous such coatings have not be suitable for conferring the defined properties on a glazing panel to provide such significant fire screening properties. One reason for this is that such coatings have a tendency to loose their heat screening properties when exposed to fire conditions.

The coating layer may be formed pyrolyticly on the glass substrate or by a vacuum technique, for example, by sputtering. In the latter case, the infra-red reflecting material is preferably silver or an alloy containing silver.

The at least one coating layer may be arranged on one side only of the glazing panel. Alternatively, a coating layer or coating stack may be arranged on each side of the glazing panel. In this latter case, the coating on one side of the glazing panel may be formed pyrolyticly on the glass substrate and that on the other side may be formed by a vacuum technique, for example, by sputtering. This may provide for a convenient manufacturing process.

Two or more monolithic glazing panels may be arranged together as a multiple sheet glazing panel. For example, a double glazing unit may be arranged having a first coated glazing sheet with a coating in position 2 spaced from a second coated glazing sheet with a coating in position 3. (The surfaces of a multiple sheet glazing panel are commonly referred to as position 1 which is the external face of the external sheet of glass, position 2 which is the internal face of the external sheet of glass, position 3 which is the internal face of the internal sheet of glass and position 4 which is the external face of the internal sheet of glass) Such positioning may:
- protect the coatings from abrasion and exposure to the atmosphere (this may be important if the coatings are sputtered coating but is generally less important for pyrolytic coatings)
- ensure that the fire screening effect is the same from each direction of the glazing panel. In the case of an outbreak of a fire, the glazing sheet nearest to the fire will be exposed to the full heat of the fire. This heat will be transmitted through this sheet of glass and be reflected back through this sheet of glass to at least some degree by the coating on the interior surface. This may cause this sheet of glass to break after a short time. However, the remaining sheet of glass will remain intact with its coating directly facing the heat source. This will consequently protect the glass of this sheet from the heat of the fire so that it stays intact longer than would otherwise be the case so as to provide a barrier to smoke, hot gasses and flames.

According to another aspect, the present invention provides a glazing panel as defined in Claim 5.

The emissivity of the glazing panel once the glazing panel has been subjected to a heating cycle equivalent to that defined as Heat Cycle A herein may be less than or equal to 0.2 or 0.15.

The inventors have realised
• that the defined properties can be conferred on a glazing panel by means of a coating layer
• that such properties can enhance the fire screening ability of the glazing panel and
• that advantageous fire screening properties can be conferred by arranging the reflection in the defined wavelengths above the defined limits.

Heating Cycle A (defined further on) is intended to approximate a fire test.

According to another aspect, the present invention provides a glazing panel as defined in Claim 6.

In this case, the emissivity of the glazing panel once the glazing panel has been subjected to a heating cycle equivalent to that defined as Heat Cycle A herein may be less than or equal to 0.1 or 0.05.

The use of at least two spaced infra-red reflecting layers may be used to improve the emissivity of the glazing panel.

According to yet further aspects, the present invention provides glazing panels as defined in the claims of European Patent Application 99 967 971.5 (European Patent 1 140 722), which is the parent application of the present application.

The combination of layers defined provides an advantageous combination of properties. In this structure, the antireflective layers must not only carry out their principal role of preventing excessive reflection in the visible portion of the spectrum but must also for example, be compatible with the other layers in the coating stack, be mechanically and chemically resistant and be suited to production on an industrial scale. The coating layers may be deposited using a vacuum technique, for example by sputtering.

The defined structure may provide an advantageous combination of:
- thermal stability if the glazing panel is subjected to fire conditions. Notably, use of the present invention may reduce degradation of the infra red reflecting layer when compared with comparable structures using, for example, known ZnO or SnO₂ antireflective layers. In particular, the nitride layer may block migration and/or diffusion of oxygen and/or ions through the coating stack and the specified mixed oxide layer may both enhance this and may be thermally more stable than other known oxides.
- ease and controllability of deposition: the antireflective layer according to the present invention may be deposited more easily and with more control than, for example, Al₂O₃ or SiO₂. Whilst Al₂O₃ and SiO₂ show a good degree of thermal stability they are difficult to deposit using common sputtering techniques.
- mechanical resistance: the antireflective layer according to the present invention may be used without prejudicing the mechanical resistance of the coating. In particular, it may perform well in pummel tests when the glazing panel is used in a laminated structure.
- compatibility with Ag: crystallisation of the Ag layer affects its optical properties. A pure ZnO layer adjacent the Ag can lead to excessive crystallisation of the Ag and to problems of haze in the coating, particularly during heat treatment. However, where an antireflective layer does not consist of ZnO there may be insufficient recrystallisation of the Ag layers resulting in a level of infra red reflection and a level of electrical conductivity in the coating which are below the optimum obtainable. The present invention may be used to favour crystallisation to a sufficient degree to provide good infra red reflecting properties whilst avoiding excessive haze. In particular, it may provide a favourable crystallisation compared with an antireflective layer composed of TiO₂.
- production cycle time: an oxide layer which is a mixture of Zn and at least one of the specified addition materials, particularly when the additional material is Ti, Ta, Zr, Nb, Bi or a mixture of these metals, will generally have a higher refractive index than antireflective layers of, for example, ZnO and SnO₂, which are commonly used in similar structures and yet will be quicker to deposit than known antireflective layers having relatively high refractive indexes, for example, TiO₂. Consequently, this may enable the production cycle time to be improved.
- good selectivity: the higher refractive index may, in addition, facilitate an increase in the selectivity of the coating stack, particularly when the additional material is Ti, Ta, Zr, Nb, Bi or a mixture of these metals.

Use of the antireflective layer in accordance with the present invention as the or part of the top antireflective layer, particularly as a layer exposed to the atmosphere may provide good chemical and mechanical resistance. Furthermore, it may provide good compatibility with a laminating film, for example a pvb film, if the glazing panel is to be laminated to form a laminated glazing panel.

The advantageous properties of the antireflective layer according to the present invention may not be obtainable if the atomic ratio X/Zn is below the specified minimum, for example, if the material X is present only in the form of an impurity or if the atomic ratio X/Zn is not sufficiently great.

Claim 2 of European Parent Patent Application 99 967 971.5 defines a particularly advantageous arrangement of the layers of the coating stack. In this arrangement:
- in the base antireflective layer, the defined nitride layer, which is preferably deposited directly on the surface of the glass substrate, provides a good barrier to ion and oxygen diffusion from the glass substrate whilst the overlying mixed oxide layer provides particularly good compatibility with the infra-red reflecting layer
- in the top dielectric, the mixed oxide layer provides particularly good compatibility with the infra-red reflecting layer whilst the defined nitride layer provides a good barrier to oxygen diffusion from the atmosphere.

As defined in Claim 3 of European Parent Patent Application 99 967 971.5, the advantageous combination of properties obtainable with the antireflective layer according to the present invention may be utilised in a coating stack having two, or indeed more than two, spaced infra-red reflecting layers.

Multiple spaced infra-red reflecting layers may be used to provide the glazing panel with a selectivity that is greater than 1.5 or 1.7 and/or to further enhance to heat reflecting properties of the glazing.

Particularly advantageous properties may be obtained if additional material X consists
- essentially of Ti
- of Ti with one or more additional materials from the specified group of materials, for example, Ti and Al
- essentially of Al
- of Al with one or more additional materials from the specified group of materials.

The filter stack may comprise one or more barrier layers underlying and/or overlying the infra red reflecting layer, as is known in the art. Barriers of, for example, one or more of the following material may be used: Ti, Zn, Cr, "stainless steel", Zr, Ni, NiCr, ZnTi and ZnAl. Such barriers may be deposited, for example, as metallic layers or as sub-oxides (i.e. partially oxidised layers). Where the coating stack includes an oxide layer, one or more of such barrier layers may comprise the same materials as the oxide layer, particularly any adjacent oxide layer. This may facilitate management of targets and control of deposition conditions and in the latter case may prove good adhesion between the layers and thus good mechanical durability of the coating stack.

The layer which comprises a nitride preferably comprises at least one of the specified materials Al, Si or Zr in an amount of at least 10% of the nitrided atoms. The layer which comprises a nitride may comprise, for example, a nitride of aluminium, a nitride of silicon, a mixed nitride comprising Al and Si, a mixed nitride comprising Al and Zr, a mixed nitride comprising Si and Zr, a mixed nitride comprising Al, Si and Zr. This layer may be used to block migration and/or dissipation of oxygen in the coating layers and migration and/or diffusion of ions and other substances from the glass substrate into the coating layers, particularly sodium and potassium.

The layer which comprises a nitride may consist essentially of AlN, Si₃N₄, ZrN or a mixture thereof.

The nitride layer may be deposited by sputtering a target in a nitrogen atmosphere. Alternatively, it may be deposited by sputtering a target in an atmosphere which is a mixture of argon and nitrogen.

The nitride layer may comprise a pure nitride or, for example, an oxynitride, a carbonitride or an oxycarbonitride.

Where the nitride layer is a mixed nitride comprising Al, it may have an atomic ration X/A1 of between 0.2 and 5, especially between 0.4 and 3.5 or between 0.4 and 2.5 where X is Si, Zr or Si and Zr. Where such a mixed nitride layer comprises Al, Si and Zr, the atomic ratios may be: Si/Al of about 0.5 and Zr/Al of about 0.2.

The combination of properties that may be provided by the present invention has particular advantages in relation to heat treatable and heat treated glazing panels. Nevertheless, the invention may also be used in respect of glazings which are not heat treated. The term "heat treatable glazing panel" as used herein means that the glazing panel carrying the coating stack is adapted to undergo a bending and/or thermal tempering and/or thermal hardening operation and/or other heat treatment process without the haze of the so treated glazing panel exceeding 0.5, and preferably without the haze exceeding 0.3. The term "substantially haze free heat treated glazing panel" as used herein means a glazing panel carrying a coating stack which has been bent and/or thermally tempered and/or thermally hardened and/or subject to another heat treatment process after deposition of the coating stack and has a haze that does not exceed 0.5 and which preferably does not exceed 0.3. Such heat treatment processes may involve heating or exposing the glazing carrying the coating stack or to a temperature greater than about 560 °C, for example, between 560 °C and 700°C in the atmosphere. Other such heat treatment processes may be sintering of a ceramic or enamel material, vacuum sealing of a double glazing unit and calcination of a wet-coated low reflective coating or anti-glare coating. The heat treatment process, especially when this is a bending and/or thermal tempering and/or thermal hardening operation, may be carried out at a temperature of at least, 600 °C for at least 10 minutes, 12 minutes, or 15 minutes, at least 620 °C for at least 10 minutes, 12 minutes, or 15 minutes, or at least 640 °C for at least 10 minutes, 12 minutes, or 15 minutes.

One or more of the antireflective layers may comprise an oxide, a nitride, a carbide or a mixture thereof. For example, the antireflective layer may comprise:
- an oxide of one or more of Zn, Ti, Sn, Si, Al, Ta or Zr; an oxide of zinc containing Al, Ga, Si or Sn or an oxide of indium containing Sn;
- a nitride of one or more of Si, Al and B or a mixture (including a double nitride) of a nitride of Zr or Ti with one of the aforementioned nitrides;
- a double compound, for example, SiOxCy, SiOxNy, SiAlxNy or SiAlxOyNz.

The antireflective layer may be a single layer or it may comprise two or more layers having different compositions. An oxide of zinc, preferably a zinc oxide containing at least one of Sn, Cr, Si, B, Mg, In, Ga and preferably Al and/or Ti is particularly preferred as use of these materials may facilitate stable formation of an adjacent infra red reflecting layer with a high crystallinity.

The thickness of the mixed oxide layer in accordance with the present invention is preferably at least 50 Å; this may provide a sufficient quantity to have a worthwhile or noticeable effect. The mixed oxide layer used in the coating stack in accordance with the present invention may have a thickness of at least 80 Å, 100 Å, 120 Å, 140 Å or 160 Å.

An oxide layer which is a mixture of Zn and at least one of the specified additional materials may be used to confer advantageous properties on one, more than one or preferably all of the antireflective layer in the coating stack. Use in all of the antireflective layers of the coating stack may simplify process control and ordering and storage of the necessary targets. Where more than one antireflective layer comprises an oxide layer which is a mixture of Zn and at least one of the specified additional materials, such oxide layers may have the same or substantially the same composition.

A particularly advantageous combination of the properties discussed above may be obtained when the atomic ratio X/Zn is within the range of about 0.03-1, preferably about 0.05-0.6 and more preferably about 0.08-0.5. The ratio X/Zn may be less than or equal to 6, 5, 4, 3 or 2.

Heat treatment may provoke an increase in the TL of the glazing panel. Such an increase in TL may be advantageous in ensuring that TL is sufficiently high for the glazing panel to provide good levels of visibility. TL may increase in absolute terms during heat treatment by, for example, greater than about 2.5%, greater than about 3%, greater than about 5%, greater than about 8% or greater than about 10%.

Nevertheless, the coating stack may be arranged such that there is no significant increase in TL during heat treatment. One way of facilitating this is to avoid the use of metallic barrier layers underneath the infra-red reflective layer(s).

Features of the present invention may be combined with other techniques used to increase the fire screening of glazing panels, for example:
- special composition glasses, for example, glasses having low coefficients of expansion and/or higher transformation temperatures than sodalime float glass and/or glass-ceramic composition(s)
- coloured glass
- hardened and/or tempered glasses
- reinforced glass containing a metal grid
- intumescent layers
- laminated glass structures

The thickness of the glass substrate may be greater than about 3mm; this may facilitate resistance to breaking, both from physical contact in ordinary use and when exposed to the thermal shock and temperatures encountered in fire conditions. The glass substrate may be, for example, about 3mm, 4mm, 5mm, 6mm, 7mm, 8mm or thicker. When arranged as a multiple glazing unit, each monolithic glazing panel need not be of the same thickness. The glazing panels may be heat treated, for example by thermal tempering; this may be done either before or after application of the coating.

One particular advantage of the present invention is the ability it provides to achieve a desired level of fire screening by enhancing the properties of known glazings and/or reducing the requirements for other aspects of a glazing. For example, the glazing panel of the present invention may be a heat tempered glass with a coating in which the tempering is relatively gentle and yet may have equivalent or improved fire screening properties when compared with a known tempered glass which has been subjected to a harsher tempering process which does not have the coating or properties required by the present invention.

Similarly, the present invention may allow a particular level of fire screening to be obtained using a larger glazing surface than has previously been possible in a similar structure.

As is well known in the art of fire screening glazings, the glazing panel must be properly assembled for example in a partition, and/or in a fire resistant window or door frame, for the overall structure to have desired fire screening properties.

It is particularly surprising that properties of the present invention may be obtained using sodalime glass, particularly sodalime float glass.

Two or more aspects of the present invention may be combined in a single embodiment or in a further aspect of the invention.

Heat Cycle A consists of the following sequential steps:
a) preheating an electrical laboratory oven under normal atmospheric conditions to about 600 °C
b) placing the glazing panel to be tested in the oven
c) removing the glazing panel from the oven after 60 minutes and allowing it to cool under normal atmospheric conditions until it reaches room temperature
d) measuring the properties of the glazing panel.

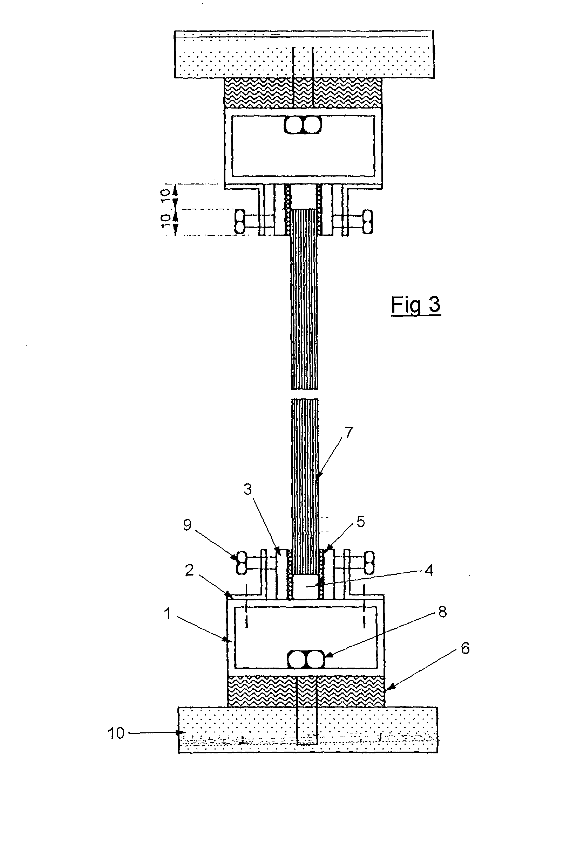

Frame System G consists of the arrangement described below with reference to Fig 3:

| Ref. N° | Description |
|---|---|
| 1 | Mild steel tube (typically 60 to 80 mm x 30mm x3mm) frame. The thickness of the tube depends on the thickness of the glazing panel |
| 2 | Mild steel angle (20mm x 20mm x 2mm) |
| 3 | Mild steel plate (20mm x 4mm) |
| 4 | Setting blocks (Promatect H) 60mm x10mm x 6 to about 30 mm depending on the thickness of the glazing panel |
| 5 | Ceramic fibre paper (20mm x uncompressed 4.2mm) |
| 6 | Uncompressed mineral wool (about 25.4 mm uncompressed) |
| 7 | Glazing panel (6 to about 30mm thick) |
| 8 | Hilti bolt M8 x 110mm |
| 9 | Mild steel screw (M3 x 25mm) |
| 10 | Masonry |

The frame is made of welded mild steel tube 1 (the width of which is adapted to the thickness of the glazing panel 7) and contains two apertures in which separate glazing panels may be arranged. Both apertures in the frame are calculated so as there is a gap of 10mm between the edge of the glazing panel and the inside edge of the frame. Two glazing panels are installed in the frame and are thus separated by a mild steel mullion having the same features as steel tube 1. Each glazing panel is put on setting blocks 4. Each glazing panel is held by the mild steel plate 3. Ceramic fiber paper 5 is arranged between the perimeter of the glazing panel and the steel plates 3. Mild steel angles 2 are screwed into the mild steel tube 1 with screws (1 screw about every 250mm). The plates are pushed towards the glazing panel by the mean of screws 9 themselves screwed in the angles 2 (1 screw about every 250mm). The frame is fixed in the masonry 10 by the mean of Hilti bolts 8. Between the frame and the masonry, there is slightly compressed mineral wool 6.

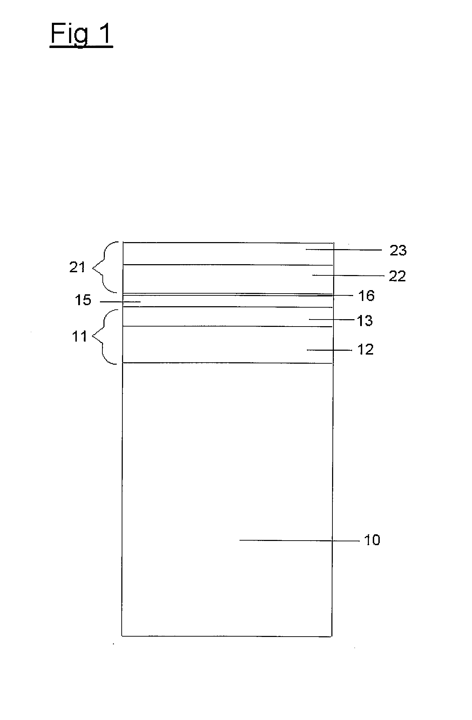

Examples of the present invention will now be described with reference to Fig 1 which is a cross-section through a glazing panel prior to assembly as a double glazing unit (for ease of representation, the relative thicknesses of the glazing panel and coating layers are not shown to scale).

### Example 1

Fig 1 shows a single Ag layer, heat treatable, coating layer deposited on a sodalime glass substrate by magnetron sputtering and having the following sequential structure:

| | | Reference number | Geometrical thickness | Atomic ratios |
|---|---|---|---|---|
| Glass substrate | | 10 | 6 mm | |
| Base dielectric comprising: | | 11 | | |
| | AlN | 12 | 50 Å | |
| | ZnAlOx | 13 | 300 Å | Al/Zn=0.1 |
| Ag | | 15 | 80 Å | |
| ZnAlOy overlying barrier | | 16 | 15 Å | Al/Zn=0.1 |
| Top dielectric comprising: | | | | |
| ZnAlOx | | 22 | 245 Å | Al/Zn=0.1 |
| AlN | | 23 | 85 Å | |

in which ZnAlOx is a mixed oxide containing Zn and Al deposited in this example by reactively sputtering a target which is an alloy or mixture of Zn and Al in the presence of oxygen. The ZnAlOy barrier is similarly deposited by sputtering a target which is an alloy or mixture of Zn and Al in an argon rich oxygen containing atmosphere to deposit a barrier that is not fully oxidised.

The oxidation state in each of the base and top ZnAlOx dielectric layers need not necessarily be the same. Equally, the Al/Zn ratio need not be the same for all of the layers; for example, the barrier layer may have a different Al/Zn ratio to the antireflective dielectric layers and the antireflective dielectric layers may have different Al/Zn ratios from each other.

In this type of structure, the Ag layer acts to reflect incident infra red radiation; in order to fulfil this role it must be maintained as silver metal rather than silver oxide and must not be contaminated by adjacent layers. The dielectric layers which sandwich the Ag layer serve to reduce the reflection of the visible portion of the spectrum which the Ag layer would otherwise provoke. The barrier serves to prevent oxidation of the Ag layer during sputtering of the overlying dielectric layer in an oxidising atmosphere; this barrier is at least partially oxidised during this process.

In this case, the barrier protects its underlying silver layer from oxidation during sputter deposition of its overlying ZnAlOx oxide layer. Whilst further oxidation of this barrier layer may occur during deposition of its overlying oxide layers a portion of this barrier preferably remains in the form of an oxide that is not fully oxidised to provide a barrier for subsequent heat treatment of the glazing panel.

This particular glazing panel is intended for incorporation in a double glazing unit with an equivalent glazing panel such that the coatings are in positions 2 and 3. The monolithic glazing panel displays the following properties:

| Property | Prior to be submitted to Heating Cycle A | After being submitted to Heating Cycle A |
|---|---|---|
| TL(Illuminant C) | 88% | |
| haze | 0.15 | |
| a* | -1.6 (coated side) | |
| b* | -3.8 (coated side) | |
| emissivity | 0.12 | 0.17 |
| reflection at 1 micron | 32% | 20% |
| reflection at 2.5 microns | 78% | 63% |
| reflection at 10 microns | 87% | 82% |
| arithmetic mean average reflection in the wavelength band between 1 micron and 10 microns | 79% | 67% |

### Example 2

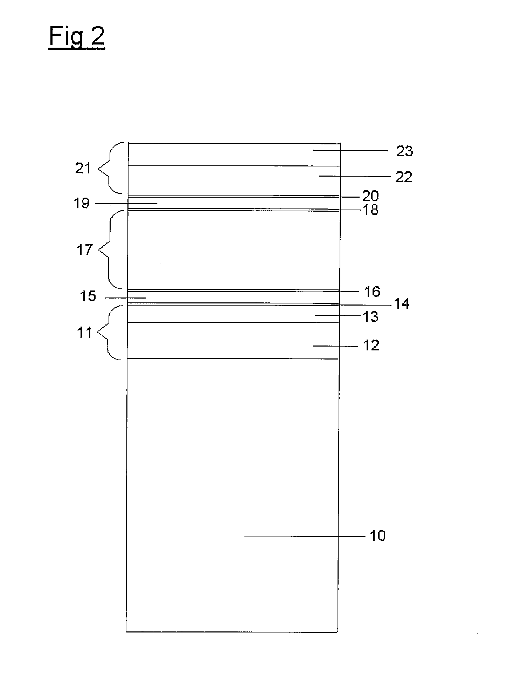

Fig 2 shows a double Ag layer, heat treatable, coating layer deposited on a sodalime glass substrate by magnetron sputtering and having the following sequential structure:

| | | Reference number | Geometrical thickness | Atomic ratios |
|---|---|---|---|---|
| Glass substrate | | 10 | 6 mm | |
| Base dielectric comprising: | | 11 | | |
| | AlN | 12 | 150 Å | |
| | ZnAlOx | 13 | 200 Å | Al/Zn=0.1 |
| ZnAl underlying barrier | | 14 | 7 Å | Al/Zn=0.1 |
| Ag | | 15 | 100 Å | |
| ZnAl overlying barrier | | 16 | 10 Å | Al/Zn=0.1 |
| Central dielectric comprising | ZnAlOx | 17 | 790 Å | Al/Zn=0.1 |
| ZnAl underlying barrier | | 18 | 5 Å | |
| Ag | | 19 | 130 Å | Al/Zn=0.1 |
| ZnAl overlying barrier | | 20 | 14 Å | Al/Zn=0.1 |
| Top dielectric comprising: | | 21 | | |
| ZnAlOx | | 22 | 220Å | Al/Zn=0.1 |
| AlN | | 23 | 85Å | |

in which ZnAlOx is a mixed oxide containing Zn and Al deposited in this example by reactively sputtering a target which is an alloy or mixture of Zn and Al in the presence of oxygen. The ZnAl barriers are similarly deposited by sputtering a target which is an alloy or mixture of Zn and Al in a substantially inert, oxygen free atmosphere.

At least a portion of the overlying barriers 16, 20 is oxidised during deposition of their overlying oxide layers. Nevertheless, a portion of these barriers preferably remains in metallic form, or at least in the form of an oxide that is not fully oxidised to provide a barrier for subsequent heat treatment of the glazing panel.

Prior to incorporation in a fire screening glazing, the glazing panel of Example 2 is thermally tempered. This causes substantially complete oxidation of the underlying barrier layers.

This particular glazing panel is intended for incorporation in a double glazing unit with an equivalent glazing panel such that the coatings are in positions 2 and 3. The monolithic glazing panel displays the following properties:

| Property | Prior to be submitted to Heating Cycle A | After being submitted to Heating Cycle A |
|---|---|---|
| TL(Illuminant C) | 77% | |
| haze | 0.2 | |
| a* | -3 (glass side) | |
| b* | -4 (glass side) | |
| emissivity | 0.03 | 0.02 |
| reflection at 1 micron | 70% | 43% |
| reflection at 2.5 microns | 91% | 95% |
| reflection at 10 microns | 97% | 98% |
| arithmetic mean average reflection in the wavelength band between 1 micron and 10 microns | 93% | 94% |

The colour co-ordinates of the examples are particularly suited to architectural applications as they give a substantially neutral reflection; the colour in reflection may be adjusted as is known in the art by adjusting the thicknesses of the dielectric layers and/or the infra red reflecting layer(s).

Additional layers may be introduced above, below or between the film stacking arrangement if desired without departing from the invention.

Whilst the examples describe the use of coating layers in positions 2 and 3 of a double glazing unit, it will be understood that other combinations of positions for coatings may be used, for example:
- a single coating could be used in any position on a monolithic or multiple glazing panel; or
- coatings could be used in positions 1 and 4 of a double glazing panel, or 1 and 3.

### Glossary

Unless otherwise indicated by the context, the terms listed below have the following meanings in this specification:

| | | |
|---|---|---|
| a* | | colour co-ordinate measured on the CIELab scale at normal incidence |
| Ag | silver | |
| Al | aluminium | |
| Al2O3 | aluminium oxide | |
| AlN | aluminium nitride | |
| arithmetic mean average infra red reflectance | | the average infra red reflectance (within the specified band of wavelengths) obtained by calculating the sum of the reflectance at specific wavelengths and dividing by the number of specific wavelengths at which the reflectance has been measured |
| b* | | colour co-ordinate measured on the CIELab scale at normal incidence |
| Bi | bismuth | |
| Cr | chromium | |
| emissivity | | the ratio of the radiant exitance of the radiator to that of a Planckian radiator (black body) at the same temperature |
| haze | | the percentage of transmitted light which in passing through the specimen deviates from the incident beam by forward scattering, as measured in accordance with the ASTM Designation D 1003-61 (Reapproved 1988). |
| infra red reflecting material | | a material that has a reflectance higher than the reflectance of sodalime glass in the band of wavelenghts between 780 nm and 50 microns |
| Nb | niobium | |
| NiCr | | an alloy or mixture comprising nickel and chromium |
| RE | energetic reflection | the solar flux (luminous and non-luminous) reflected from a substrate as a percentage of the incident solar flux |
| selectivity | | the ratio of the luminous transmittance to the solar factor i.e. TL/TE |
| Si02 | silicon oxide | |
| Si3N4 | silicon nitride | |
| Sn02 | tin oxide | |
| Ta | tantalum | |
| TE | energetic transmittance | the solar flux (luminous and non-luminous) transmitted through a substrate as a percentage of the incident solar flux |
| Ti | titanium | |
| TL | luminous transmittance | the luminous flux transmitted through a substrate as a percentage of the incident luminous flux |
| Zn | zinc | |
| ZnAl | | an alloy or mixture comprising zinc and aluminium |
| ZnAlOx | | a mixed oxide containing zinc and aluminium |
| ZnAlOy | | a partially oxidised mixture comprising zinc and aluminium |
| ZnO | zinc oxide | |
| ZnTi | | an alloy or mixture comprising zinc and titanium |
| ZnTiOX | | a mixed oxide containing zinc and titanium |
| Zr | zirconium | |

## Claims

1. A multiple sheet glazing panel having dimensions of at least 0.9m by 2m comprising
a first glass substrate carrying at least one coating layer and
a second glass substrate, spaced from the first glass substrate without an intervening intumescent material
**characterised in that** the glazing panel assembled in Frame System G has a fire resistance of at least 65 minutes when tested according to European Standards prEN 1363-1 and prEN 1364-1 (Final drafts of October 1998).

2. A multiple sheet glazing panel having dimensions of at least 0.9m by 2m comprising
a first glass substrate carrying at least one coating layer and
a second glass substrate, spaced from the first glass substrate without an intervening intumescent material
**characterised in that** thermal radiation of the glazing panel measured for two such glazing panels arranged side by side in Frame System G after 60 minutes of a fire test in accordance with European Standards prEN 1363-1 and prEN 1364-1 (Final drafts of October 1998) is less than or equal to 10 kW/m².

3. A glazing panel comprising a glass substrate carrying at least one coating layer in which
a) the at least one coating comprises a single layer of infra-red reflecting material; and
b) the arithmetic mean average infra red reflectance of the glazing panel in the band of wavelengths 1-10 microns once the glazing panel has been subjected to a heating cycle equivalent to that defined as Heat Cycle A herein is at least 60%.

4. A glazing panel comprising a glass substrate carrying at least one coating layer in which
a) the at least one coating comprises at least two, spaced layers of infra-red reflecting material; and
b) the arithmetic mean average infra red reflectance of the glazing panel in the band of wavelengths 1-10 microns (measured on the coated side) once the glazing panel has been subjected to a heating cycle equivalent to that defined as Heat Cycle A herein is at least 65%.

5. A glazing panel comprising a glass substrate carrying at least one coating layer in which
a) the at least one coating comprises a single layer of infra-red reflecting material; and
b) the emissivity of the glazing panel (measured on the coated side) once the glazing panel has been subjected to a heating cycle equivalent to that defined as Heat Cycle A herein is less than or equal to 0.25.

6. A glazing panel comprising a glass substrate carrying at least one coating layer in which
a) the at least one coating comprises at least two, spaced layers of infra-red reflecting material; and
b) the emissivity of the glazing panel (measured on the coated side) once the glazing panel has been subjected to a heating cycle equivalent to that defined as Heat Cycle A herein is less than or equal to 0.15.

7. A glazing panel in accordance with any preceding claim, in which the glass substrate carrying the coating layer is sodalime float glass.
